# EUROPÄISCHE PATENTSCHRIFT

(11) **EP 2 251 639 B1**
(45) Veröffentlichungstag und Bekanntmachung des Hinweises auf die Patenterteilung: **28.08.2013**
(21) Anmeldenummer: 10004908.9
(22) Anmeldetag: 10.05.2010
(51) Int. Cl.: G01B 11/25, G01N 21/88, G01N 21/95

(54) **Vorrichtung und Verfahren zum optischen Inspizieren eines Gegenstandes**
Device and method for optically inspecting an object
Dispositif et procédé d'inspection optique d'un objet

(30) Priorität: 12.05.2009 DE 102009021733
(43) Veröffentlichungstag der Anmeldung: 17.11.2010
(73) Patentinhaber: Carl Zeiss OIM GmbH, 73117 Wangen (DE)
(72) Erfinder: Knupfer, Klaus-Georg, 73457 Essingen (DE); Reimann, Joachim, 73087 Bad Boll (DE); Beck, Rolf, 73728 Esslingen (DE)
(74) Vertreter: Carl Zeiss AG - Patentabteilung

(56) Entgegenhaltungen:
- EP-A1- 1 677 098
- EP-A1- 1 857 773
- GB-A- 2 240 623
- JP-A- 2007 183 225
- US-A1- 2006 228 018

## Beschreibung

Die Erfindung betrifft eine Vorrichtung zum optischen Inspizieren eines Gegenstandes mit
- einem Trägerelement, das drehbar um eine Drehachse gelagert ist, die eine Drehrichtung definiert,
- einer Anzahl von Lichtquellen, die an dem Trägerelement angeordnet sind und eine Anordnung von Lichtquellen bilden,
- zumindest einer Bildaufnahmeeinheit zum Aufnehmen einer Anzahl von Bildern von dem Gegenstand, und
- einer Auswerte- und Steuereinheit, die dazu ausgebildet ist, Eigenschaften des Gegenstandes anhand der Bilder zu bestimmen,
wobei das Trägerelement bei einer Drehung in der Drehrichtung einen Inspektionsraum zur Aufnahme des Gegenstandes definiert, wobei die Anordnung bei der Drehung eine Mantelfläche mit einer ersten Quererstreckung in der Drehrichtung definiert, und wobei die Anordnung eine zweite Quererstreckung in der Drehrichtung besitzt, die kleiner ist als die erste Quererstreckung.

Die Erfindung betrifft ferner ein Verfahren zum optischen Inspizieren eines Gegenstandes, mit den Schritten:
- Bereitstellen eines Trägerelements, das drehbar um eine Drehachse gelagert ist, die eine Drehrichtung definiert,
- Bereitstellen einer Anzahl von Lichtquellen, die an dem Trägerelement angeordnet sind und eine Anordnung von Lichtquellen bilden,
- Drehen des Trägerelements in der Drehrichtung,
- Aufnehmen einer Anzahl von Bildern von dem Gegenstand, und
- Bestimmen von Eigenschaften des Gegenstandes anhand der Bilder, und
wobei das Trägerelement bei einer Drehung in der Drehrichtung einen Inspektionsraum zur Aufnahme des Gegenstandes definiert, wobei die Anordnung bei der Drehung eine Mantelfläche mit einer ersten Quererstreckung in der Drehrichtung definiert, und wobei die Anordnung eine zweite Quererstreckung in der Drehrichtung besitzt, die kleiner ist als die erste Quererstreckung.

Eine solche Vorrichtung und ein solches Verfahren sind aus DE 10 2005 038 535 A1 bekannt.

Bei der industriellen Fertigung von Produkten spielt die Produktqualität seit vielen Jahren eine zunehmend wichtige Rolle. Hohe Produktqualität kann einerseits durch entsprechend ausgelegte und stabile Fertigungsprozesse erreicht werden. Andererseits müssen die Qualitätsparameter eines Produktes möglichst zuverlässig und vollständig kontrolliert werden, um Qualitätsmängel frühzeitig zu erkennen. In vielen Fällen spielt die Qualität einer Produktoberfläche eine Rolle. Dabei kann es sich um dekorative Oberflächen handeln, wie beispielsweise Laekoberflächen bei Kraftfahrzeugen oder Haushaltsgegenständen, oder um technische Oberflächen, wie etwa die Oberflächen von fein bearbeiteten metallischen Kolben oder Lagerflächen.

Es gibt bereits eine Vielzahl von Vorschlägen und Konzepten, um Oberflächen automatisiert zu inspizieren. Häufig sind die bekannten Verfahren und Vorrichtungen jedoch nur für einen speziellen Anwendungsfall einsetzbar, weil sie hohes a priori-Wissen über die zu inspizierende Oberfläche voraussetzen. Darüber hinaus sind die bekannten Verfahren und Vorrichtungen für viele Anwendungsfälle nicht ausgereift genug, um eine effiziente und zuverlässige Inspektion von Oberflächen unter Industriebedingungen zu ermöglichen. Industriebedingungen beinhaltet in diesem Fall die Einhaltung von Zykluszeiten, die für eine Einbindung in eine industrielle Fertigung relevant sind, die Fähigkeit, die Oberflächeninspektion in einer Fertigungshalle durchzuführen, und/oder die Möglichkeit, die Oberflächeninspektion einfach und schnell an wechselnde Produkte anzupassen.

Infolgedessen wird beispielsweise in der Automobilindustrie bis heute in erheblichem Ausmaß eine visuelle Inspektion von Lackoberflächen durch erfahrene und geschulte Personen durchgeführt. Der Automatisierungsgrad bei der Inspektion von glänzenden Lackoberflächen ist wesentlich geringer als der Automatisierungsgrad in der Fertigung selbst. Ein Beispiel für eine Vorrichtung zur visuellen Inspektion der Lackoberfläche eines Kraftfahrzeugs ist in US 5,636,024 beschrieben. Die Vorrichtung beinhaltet einen Tunnel, durch den die Kraftfahrzeuge mit den zu inspizierenden Lackoberflächen transportiert werden. An den Innenwänden des Tunnels befinden sich Lichtquellen, die ein Hell-Dunkel-Muster aus hellen und dunklen Streifen erzeugen. Diese Hell-Dunkel-Muter werden von der Lackoberfläche der Kraftfahrzeuge reflektiert. Die Inspektion der Lackoberfläche wird von Personen durchgeführt, die im Tunnel stehen und die Reflexionen der Hell-Dunkel-Muster an der Lackoberfläche visuell prüfen. Es ist leicht nachvollziehbar, dass eine solche Vorgehensweise in erheblichem Ausmaß von den Fähigkeiten des Betrachters abhängt und daher nur eine begrenzte Zuverlässigkeit bietet. Außerdem ist eine solche Vorgehensweise arbeitsintensiv und dementsprechend teuer.

DE 103 17 078 A1 beschreibt ein deflektometrisches Verfahren und eine entsprechende Vorrichtung. Bei diesem Verfahren wird ein Streifenmuster mit einem sinusförmigen Helligkeitsverlauf auf einen Schirm projiziert, der schräg über einer zu inspizierenden Oberfläche angeordnet ist. Das projizierte Muster wird verändert oder bewegt, so dass entsprechend veränderte Streifenmuster auf die Oberfläche fallen. Während oder nach dem Verändern/Bewegen des Musters wird jeweils ein Bild der Oberfläche mit dem reflektierten Muster aufgenommen. Durch eine mathematische Verknüpfung der zu verschiedenen Zeitpunkten aufgenommenen Bilder soll ein Ergebnisbild erzeugt werden, anhand dessen defektbehaftete Bereiche und defektfreie Bereiche der Oberfläche rechnerisch und/oder visuell unterschieden werden können. Ein ähnliches Verfahren und eine ähnliche Vorrichtung sind aus einer Publikation von Sören Kammel mit dem Titel "Deflektometrie zur Qualitatsprüfung spiegelnd reflektierender Oberflächen", erschienen in der DE-Zeitschrift tm-technisches Messen, Ausgabe 4/2003, Seiten 193 bis 198 bekannt. In diesem Fall erfolgt eine Auswertung der gewonnenen Bilddaten durch Vergleich mit einer Referenz, was eine exakte Ausrichtung des zu untersuchenden Objekts zu den Referenzdaten erfordert.

In einer Publikation von Markus Knauer mit dem Titel " Vermessung spiegelnder Oberflächen - eine Aufgabe der optischen 3D-Sensorik", erschienen in der DE-Zeitschrift Photonik, Ausgabe 4/2004, Seiten 62 bis 64, wird ein deflektometrisches Stereoverfahren vorgeschlagen, bei dem jeder Oberflächenpunkt aus zwei verschiedenen Richtungen aufgenommen wird, um das so genannte Mehrdeutigkeitsproblem der Deflektometrie zu lösen.

Weitere Verfahren und Vorrichtungen zur optischen Inspektion von zumindest teilweise reflektierenden Oberflächen sind in DE 198 21 059 C2 oder in US 6,100,990 offenbart. Auch hier werden Hell-Dunkel-Muster aus hellen und dunklen Streifen mit einem sinusförmigen Helligkeitsverlauf über die zu inspizierende Oberfläche betrachtet. In allen Fällen werden die Hell-Dunkel-Muster auf einem ebenen Schirm erzeugt, der schräg zu der zu inspizierenden Oberfläche angeordnet ist. Diese Verfahren besitzen somit den Nachteil, dass jeweils nur eine relativ kleine Oberfläche inspiziert werden kann, die zudem in einer zumindest weitgehend bekannten und definierten Position und Ausrichtung zu dem Hell-Dunkel-Muster angeordnet sein muss. Eine schnelle, zuverlässige und effiziente Inspektion von glänzenden Oberflächen unter Industriebedingungen ist damit nicht möglich.

US 5,726,705 und DE 37 12 513 A1 offenbaren jeweils ein Verfahren und eine Vorrichtung, wobei ein Kraftfahrzeug unter einer brückenartigen Anordnung hindurchgeführt wird, an der eine Vielzahl von Kameras angeordnet ist. Die Detektion von Lackfehlem oder anderen Oberflächendefekten erfolgt mit Hilfe von Lichtstreifen oder Lichtbändern, deren Reflexion ausgewertet wird. Bei einer defektfreien Oberfläche sieht jede Kamera den jeweiligen hellen oder dunklen Streifen. Ein Oberflächendefekt, wie etwa eine Beule, hat zur Folge, dass das Licht von einem hellen Streifen in das Bild eines dunklen Streifens abgelenkt wird, so dass in dem Bild des dunklen Streifens ein heller Lichtpunkt sichtbar ist. Diese Verfahren besitzen eine limitierte Detektionssicherheit. Kleine Kratzer oder mattere Lackstellen, die keine nennenswerten Reflexionen in eine andere Raumrichtung als die umgebenden Bereiche erzeugen, lassen sich mit diesen Vorrichtungen nicht detektieren.

Die eingangs genannte DE 10 2005 038 535 A1 hat die Probleme mit der Anpassung der Oberflächeninspektion an Zykluszeiten industrieller Fertigungen erkannt und schlägt einen zylindrischen Streifenprojektor zur Ausleuchtung eines Gegenstandes mit einer zu inspizierenden Oberfläche vor. Ein zylindrischer Hohlkörper soll an seiner Innenwand mit einer Elektrolumineszenzfolie belegt oder beschichtet sein. Die Folie soll mit farbigen oder graustufigen Streifen versehen sein, die entweder aufgedruckt oder mit Hilfe einer zweiten Folie realisiert sind. Der zylindrische Hohlkörper soll in einem zweiten äußeren Hohlkörper so gelagert sein, dass er mechanisch in eine Rotationsbewegung versetzt werden kann. Die Rotationsbewegung soll eine Relativbewegung der Hell-Dunkel-Muster relativ zu der zu inspizierenden Oberfläche erzeugen. Auf diese Weise wird ein feststehendes, dauerhaft gleichbleibendes Hell-Dunkel-Muster verwendet, das nur gemeinsam mit dem zylindrischen Hohlkörper bewegt werden kann.

GB 2 240 632 A zeigt eine Vorrichtung zum optischen Inspizieren eines Gegenstands, wobei eine oder mehrere strichförmige Lichtquellen an einem Trägerelement angeordnet sind, welches drehbar um eine Drehachse gelagert ist. Eine oder mehrere Kameras sind ebenfalls am Trägerelement angebracht, sodass sie-zusammen mit den Lichtquellen um den Gegenstand gedreht werden können.

US 2006/0228018 A1 offenbart eine Vorrichtung zum optischen Inspizieren eines Gegenstandes, wobei eine Mehrzahl von Zellen in einer Matrixstruktur angeordnet ist, und wobei jede der Zellen entweder ein Kamera-Element oder ein Lichtquellen-Element umfasst.

EP 1 677 098 A1 zeigt eine Vorrichtung zum optischen Inspizieren eines Gegenstandes, wobei Lichtquellen in einer wabenförmigen Netzstruktur auf einem Trägerelement angeordnet sind, und der Gegenstand auf einem Förderband in gerader Linie an dem Trägerelement vorbeibewegt wird.

EP 1 857 773 A1 zeigt eine Vorrichtung zum optischen Inspizieren der Transmissions-Eigenschaften einer durchsichtigen Scheibe, wobei an einem ortsfesten Trägerelement eine Anzahl von LED-Lichtquellen angebracht sind, und eine Kamera hinter der zu untersuchenden Scheibe drehbar angebracht ist, um die Verzerrung des durch die Scheibe beobachteten Bildes der Lichtquellen zu beobachten.

JP 2007 183225 A zeigt eine Vorrichtung zum optischen Inspizieren von gekrümmten Flächen, wobei eine Mehrzahl von Lichtquellen an einem ortsfesten, bogenförmigen

Trägerelement angebracht sind und eine ebenfalls ortsfeste Kamera ein an der zu inspizierenden Fläche gespiegeltes Bild der Lichtquellen aufnimmt.

Vor diesem Hintergrund ist es eine Aufgabe der vorliegenden Erfindung, eine alternative Vorrichtung und ein entsprechendes Verfahren anzugeben, die eine schnelle und zumindest weitgehend automatisierte Inspektion von Gegenständen unter Industriebedingungen ermöglicht. Dabei ist es wünschenswert, dass die Vorrichtung möglichst kostengünstig realisiert werden kann.

Gemäß einem Aspekt der Erfindung wird diese Aufgabe durch eine Vorrichtung gemäß Anspruch 1 gelöst, bei der die Auswerte- und Steuereinheit ferner dazu ausgebildet ist, die Lichtquellen in Abhängigkeit von einer momentanen Drehposition des Trägerelements in der Drehrichtung anzusteuern, um auf der gesamten Mantelfläche ein variables Hell-Dunkel-Muster mithilfe der Lichtquellen zu erzeugen.

Gemäß einem weiteren Aspekt der Erfindung wird diese Aufgabe durch ein Verfahren gemäß Anspruch 14 gelöst, bei dem die Lichtquellen in Abhängigkeit von einer momentanen Drehposition des Trägerelements in der Drehrichtung angesteuert werden, um auf der gesamten Mantelfläche ein variables Hell-Dunkel-Muster mithilfe der Lichtquellen zu erzeugen.

Die neue Vorrichtung und das neue Verfahren verwenden eine Anordnung von Lichtquellen, um das Hell-Dunkel-Muster zu erzeugen. Die erste Quererstreckung des Hell-Dunkel-Musters ist größer als die Quererstreckung der Anordnung, sodass die Anordnung zu einem bestimmten Zeitpunkt nur einen Teil des Hell-Dunkel-Musters erzeugen kann. Das Drehen des Trägerelements führt zu einer Bewegung der Anordnung entlang der Mantelfläche. Die Auswerte- und Steuereinheit steuert die Lichtquellen in Abhängigkeit von der momentanen Drehposition an. Dies führt dazu, dass an einer Drehposition (und damit zu einem bestimmten Zeitpunkt) ein Teil des Hell-Dunkel-Musters erzeugt wird. Der Gegenstand kann von der Mantelfläche über 360° und damit von dem Hell-Dunkel-Muster vollständig umschlossen werden, ohne einen geschlossenen Zylinder oder einen anderen Musterträger zu verwenden. Gleichwohl kann der Gegenstand entlang der gesamten Mantelfläche mit variablen Hell-Dunkel-Mustern inspiziert werden. Aufgrund der Drehbewegung des Trägerelements ist der Gegenstand aus praktisch allen Richtungen sichtbar, was eine großflächige automatisierte Inspektion begünstigt.

Zum Inspizieren wird der Gegenstand in dem Inspektionsraum angeordnet und die Anordnung von Lichtquellen wird in der Drehrichtung bewegt. Zum Aufnehmen der Bilder wird der Verschluss der Bildaufnahmeeinheit für eine definierte Zeitdauer, die Belichtungszeit, geöffnet. Vorteilhaft ist die Belichtungszeit gleich der Zeitdauer für einen vollständigen Umlauf der Anordnung von Lichtquellen. In Fällen, in denen mehrere Anordnungen (zum Beispiel drei) zum Einsatz kommen, die in gleichen Winkelabständen zueinander in Drehrichtung verteilt sind, können sich die verteilten Anordnungen die Aufgabe der Musterzeugung teilen, so dass die Belichtungszeit dann 1/m der Umdrehungszeit des Trägerelementes sein kann, wenn m die Anzahl der verteilten Anordnungen ist.

Nach dem Aufnehmen der Bilder werden diese durch die Auswerte- und Steuereinheit analysiert. In vorteilhaften Ausgestaltungen wird jeder zu inspizierende Oberflächenpunkt des Gegenstandes zumindest drei Mal aufgenommen, wobei das Hell-Dunkel-Muster in jedem der zumindest drei Bilder eine andere Relativposition zu dem Oberflächenpunkt besitzt. Dies kann auf einfache Weise dadurch realisiert werden, dass das Trägerelement zumindest dreimal um den Gegenstand gedreht wird, wobei in jedem Fall ein Hell-Dunklel-Muster erzeugt wird, das gegenüber dem vorhergehenden Umlauf verschoben ist. Anhand der zumindest drei Bilder bestimmt die Auswerte- und Steuereinheit Eigenschaften des Gegenstandes, wie bspw. die Reflekfivität der Oberfläche und/oder die lokale Oberflächenneigung an dem Oberflächenpunkt. Diese Eigenschaften lassen sich vorteilhaft zur Detektion von Oberflächendefekten wie Kratzern, Lunkern und Poren verwenden.

Die neue Vorrichtung und das neue Verfahren besitzen den Vorteil, dass nur ein kleiner Bereich der Mantelfläche mit Lichtquellen versehen sein muss, um ein Hell-Dunkel-Muster über die gesamte Mantelfläche bereitzustellen. Dies führt zu einer geringen Anzahl von aktiven Bauelementen und damit zu einer kostengünstigen Herstellung. Gleichzeitig kann die gesamte Mantelfläche sehr flexibel mit variablen Hell-Dunkel-Mustern beleuchtet werden. Durch die geringe Anzahl an Lichtquellen wird nur wenig Wärme erzeugt und die Lichtquellen und das Trägerelement werden durch die Drehung auch noch automatisch von der Umgebungsluft gekühlt. Damit werden nur wenige oder keine zusätzlichen Kühlvorrichtungen benötigt, was zu einer besonders kostengünstigen Realisierung beiträgt.

Ein weiterer Vorteil der neuen Vorrichtung und des neuen Verfahrens liegt darin, dass eine störende "Selbstaufhellung" innerhalb des Inspektionsraums reduziert oder sogar vennieden werden kann. Für die optische Inspektion einer Oberfläche, insbesondere für eine deflektometrische Inspektion, sollen die Bilder die betrachteten Oberflächenpunkte möglichst kontrastreich mit dem darauf fallenden Hell-Dunkel-Muster zeigen. Zusätzliches Licht aus Richtungen und/oder von Lichtquellen, die für die Inspektion nicht verwertet werden können, reduziert den Kontrast. Dies gilt im Fall eines geschlossenen Inspektionsraums auch für Licht aus Bereichen, die die Bildaufnahmeeinheit für eine bestimmte Aufnahme nicht benötigt. Die neue Vorrichtung und das neue Verfahren reduzieren diesen Effekt. Vorteilhaft wird aus diesem Grund auch das Eindringen von Fremdlicht in den Inspektionsraum minimiert, beispielsweise durch ein lichtundurchlässiges Gehäuse, in dem das Trägerelement angeordnet ist.

Wenngleich die neue Vorrichtung und das neue Verfahren besonders vorteilhaft für eine deflektometrische Inspektion einer zumindest teilweise reflektierenden Oberfläche sind, kann die Vorrichtung prinzipiell auch für andere Verfahren zum optischen Inspizieren eines Gegenstandes eingesetzt werden, etwa nach dem Prinzip von Shape-from-Shading oder Streifenprojektion.

Die oben genannte Aufgabe ist vollständig gelöst.

Das Trägerelement weist einen ersten und einen zweiten Trägerarm auf, die jeweils eine Anordnung von Lichtquellen tragen, wobei der erste und der zweite Trägerarm in Drehrichtung versetzt zueinander angeordnet sind.

Das Trägerelement besitzt zumindest zwei Trägerarme, an denen die Lichtquellen angeordnet sind. Die Trägerarme sind in Drehrichtung winkelversetzt zueinander angeordnet, insbesondere um 180°, d.h. die Trägerarme liegen einander gegenüber, Die Trägerarme bilden eine skelett- oder stabartige Struktur. Die zwei Trägerarme sind vorteilhafterweise fest miteinander verbunden. Vorzugsweise besitzen die zwei Trägerarme gleichartige Anordnungen, die jeweils die gleiche Anzahl und Position an Lichtquellen aufweisen.

Die Verwendung solcher Trägerarme führt dazu, dass die Position der Bildaufnahmeeinheit flexibel gewählt werden kann, da der Inspektionsraum aus vielen Richtungen während des Drehens einsichtig ist. Somit ist auch die Verwendung mehrerer Bildaufnahmeeinheiten einfach möglich. Bei Stillstand des Trägerelements ist der Inspektionsraum zudem sehr gut zugänglich, um den Gegenstand zu positionieren oder im Anschluss aus dem Inspektionsraum zu entnehmen. Durch zumindest zwei Trägerarme wird ein gleichförmiges, konstantes Drehen des Trägerelements vereinfacht. Die zwei Anordnungen können außerdem nacheinander an jeweils gleicher Drehposition das gleiche Hell-Dunkel-Muster erzeugen, wodurch das entstehende Hell-Dunkel-Muster an dieser Drehposition insgesamt heller und kontrastreicher wird. Es ist aber auch denkbar, dass die Anordnungen verschiedene Hell-Dunkel-Muster erzeugen, die abwechselnd oder in einer sich überlagernden Weise für die Inspektion genutzt werden.

Eine Ausgestaltung der Trägerarme als Trägerwinkel ist besonders einfach. Der Trägerwinkel besitzt eine etwa L-förmige Form. Ein erster Schenkel verläuft in etwa radial von der Drehachse weg. Ein zweiter Schenkel liegt in etwa parallel zur Drehachse. Sehr einfach ist ein Trägerwinkel, bei dem die beiden Schenkel rechtwinklig zueinander stehen, wobei die Anordnung vorzugsweise in dem Schenkel parallel zu Drehachse angeordnet ist. Auf diese Weise lassen sich die Lichtquellen sehr einfach mit gleicher Hauptlichtrichtung anordnen und es lässt sich eine vorteilhafte zylinderförmige Mantelfläche erzeugen.

In einer weiteren Ausgestaltung sind die Anordnungen des ersten und des zweiten Trägeraims mit verschiedenen radialen Abständen zu der Drehachse angeordnet.

In dieser Ausgestaltung sind die mehreren Anordnungen des Trägerelements unterschiedlich weit von der Drehachse entfernt. Jede der Anordnungen definiert dann eine eigene Mantelfläche, auf der jeweils ein eigenes Hell-Dunkel-Muster erzeugt werden kann. Die Hell-Dunkel-Muster der unterschiedlichen Mantelflächen sind unabhängig voneinander wählbar. Die Verwendung verschiedener Hell-Dunkel-Muster in unterschiedlichen Abständen zur Drehachse - und damit unterschiedlichen Abständen zum Gegenstand - ist besonders vorteilhaft für eine deflektometrische Inspektion einer Oberfläche. Sie ermöglicht es, die lokale Oberflächenneigung eines zu inspizierenden Oberflächenpunktes quantitativ zu bestimmen, ohne dass der genaue Abstand zwischen dem Hell-Dunkel-Muster und dem Oberflächenpunkt bekannt sein muss. Mit nur einem einem Hell-Dunkel-Muster in einem definierten Abstand kann die lokale Oberflächenneigung lediglich mit einer Mehrdeutigkeit bestimmt werden. Diese Mehrdeutigkeit kann mit Hilfe von zwei Messungen mit Hell-Dunkel-Mustern in verschiedenen Abständen aufgelöst werden, was durch die vorliegenden Ausgestaltung sehr erleichtert wird.

In einer weiteren Ausgestaltung besitzt die Vorrichtung einen Abstandshalter mit einer variablen Länge, die den radialen Abstand der Anordnung zu der Drehachse definiert.

In dieser Ausgestaltung besitzt das Trägerelement einen variablen Abstandshalter, insbesondere einen Teleskoparm oder Teleskopschenkel, um den radialen Abstand der Anordnung zu der Drehachse verändern zu können. Durch Verändern des Abstandes kann der Inspektionsraum an den Gegenstand angepasst werden. Vorteilhaft ist, dass Gegenstände unterschiedlicher Größe mit der gleichen Vorrichtung inspiziert werden können und gleichzeitig ein optimaler Abstand des Hell-Dunkel-Musters zu dem Gegenstand gewählt werden kann. Außerdem kann das Hell-Dunkel-Muster mit unterschiedlichen Abständen zum Gegenstand erzeugt werden, um das Mehrdeutigkeitsproblem zu lösen.

In einer weiteren Ausgestaltung weist das Trägerelement einen Trägerbogen mit einer gekrümmten Innenseite auf, entlang der die Lichtquellen angeordnet sind.

In dieser Ausgestaltung umrahmt das Trägerelement den Gegenstand bogenförmig. Der Trägerbogen besitzt beispielsweise einen weitgehend Ω-artigen Verlauf. Ein durch den Trägerbogen definierter Inspektionsraum kann bspw. ein Paraboloid, eine Sphäre, ein Ellipsoid oder ein Abschnitt dieser Formen sein. Die Ausgestaltung vermeidet Kanten und andere Unstetigkeiten in dem Hell-Dunkel-Muster und erleichtert damit die Auswertung.

In einer weiteren Ausgestaltung weist das Trägerelement einen weitgehend geschlossenen Trägerring mit einer Innenseite auf, an der die Lichtquellen angeordnet sind.

In dieser Ausgestaltung besitzt das Trägerelement eine ringartige Struktur, die vollständig oder im wesentlichen vollständig geschlossen ist. Der Trägerring kann Öffnungen aufweisen, durch die der Gegenstand in oder aus den Inspektionsraum gebracht werden kann. Auch sind Öffnungen denkbar, durch die die Bildaufnahmeeinheit die Bilder aufnimmt. Ein kreisförmiger Trägerring besitzt den Vorteil, dass die Lichtquellen alle den gleichen Abstand zu dem Ringmittelpunkt besitzen und den Gegenstand vollständig oder im Wesentlichen vollständig umgeben.

In einer weiteren Ausgestaltung weist das Trägerelement zumindest eine Hohlwelle auf, an der das Trägerelement drehbar gelagert ist.

In dieser Ausgestaltung besitzt das Trägerelement eine Hohlwelle, die einen Teil des Drehlagers bildet. Vorteilhaft ist die Hohlwelle konzentrisch zu der Drehachse angeordnet. Die Ausgestaltung als Hohlwelle ermöglicht einen Zugang in den Inspektionsraum beim Drehen.

In einer weiteren Ausgestaltung nimmt die Bildaufnahmeeinheit die Bilder durch die Hohlwelle auf.

In dieser Ausgestaltung ist die Bildaufnahmeeinheit durch die Hohlwelle hindurch in den Inspektionsraum gerichtet, vorteilhafterweise in etwa entlang oder parallel zu der Drehachse. Diese Ausgestaltung bietet den Vorteil, dass der Gegenstand entlang der Drehachse sehr einfach inspiziert werden kann. Außerdem gelangt das Trägerelement hier nicht zwischen den zu inspizierenden Gegenstand und die Bildaufnahmeeinheit.

In einer weiteren Ausgestaltung bildet die Hohlwelle eine Beladeöffnung zum Einbringen des Gegenstandes in den Inspektionsraum.

In dieser Ausgestaltung kann der Gegenstand zum Inspizieren zunächst durch die Hohlwelle, und damit durch das Trägerelement hindurch, in den Inspektionsraum eingebracht werden. Dies ist insbesondere dann von Vorteil, wenn es sich um einen langen Gegenstand handelt, der nur teilweise in den Inspektionsraum passt. Der Gegenstand kann durch die Beladeöffnung abschnittsweise in den Inspektionsraum eingeführt und dort inspiziert werden. Weiter ist denkbar, dass am Trägerelement eine zweite Hohlwelle mit einer Entladeöffnung angeordnet ist, die diametral der Beladeöffnung gegenüberliegt. Somit besteht die Möglichkeit, dass ein sehr langer Gegenstand durch die Beladeöffnung in den Inspektionsraum eingeführt wird und durch die Entladeöffnung den Inspektionsraum verlassen kann, während das Trägerelement an zwei Stellen drehbar gelagert ist. Somit ist ein weitgehend kontinuierliches Inspizieren sehr langer Gegenstände mittels einer verhältnismäßig kleinen Vorrichtung möglich.

In einer weiteren Ausgestaltung weist die Vorrichtung Kühlrippen auf, die an dem Trägerelement ausgebildet sind und jeweils eine Haupterstreckung in der Drehrichtung besitzen.

In dieser Ausgestaltung sind Kühlrippen vorzugsweise direkt an dem Trägerelement angeordnet oder integral ausgebildet. Die Kühlrippen besitzen eine Haupterstreckung in Drehrichtung und liegen vorzugsweise kammartig parallel zur Drehrichtung. Dies führt zu einer besonders guten Durchströmung der Kühlrippen mit Luft. Die Wärme der Lichtquellen kann sehr effektiv abgeführt werden, was zu einer hohen Lebensdauer, hohen Lichteffizienz und zu einer geringen thermische Verformung des Trägerelements beiträgt. Letzteres ermöglicht eine erhöhte Messgenauigkeit aufgrund stabiler Hell-Dunkel-Muster.

In einer weiteren Ausgestaltung ist die Auswerte- und Steuereinheit dazu ausgebildet, die Bildaufnahmeeinheit anzusteuern, um die Bilder von dem Gegenstand in Abhängigkeit von der momentanen Drehposition aufzunehmen.

Bevorzugt steuert die Auswerte- und Steuereinheit die Bildaufnahmeeinheit so an, dass die Belichtungszeit so lange dauert, bis das Hell-Dunkel-Muster auf der gesamten Mantelfläche erzeugt worden ist. Wenn mehrere Anordnungen an mehreren Trägerarmen vorhanden sind, kann (muss aber nicht) die Belichtungszeit vorteilhaft 1/m der Umlaufzeit sein, wobei m die Anzahl der Anordnungen bzw. Trägerarme ist. In dieser Ausgestaltung wird die Bildaufnahmeeinheit von der gleich Auswerte- und Steuereinheit gesteuert, die auch die Lichtquellen ansteuert.

Die Ausgestaltung besitzt den Vorteil, dass die Bildaufnahme und die Mustererzeugung einfach synchronisiert werden können.

In einer weiteren Ausgestaltung ist die Auswerte- und Steuereinheit dazu ausgebildet, eine Intensität der Lichtquellen in Abhängigkeit von der momentanen Drehposition zu steuern.

In dieser Ausgestaltung wird die Intensität bzw. Helligkeit der Lichtquelle in Abhängigkeit von der Drehposition durch die Auswerte- und Steuereinheit eingestellt. Dies ermöglicht es auf sehr einfache Weise, unterschiedliche Lichtintensitäten an unterschiedlichen Drehpositionen zu erzeugen, um auf diese Weise ein gewünschtes Hell-Dunkel-Muster an einer definierten Position zu erzeugen. Besonders vorteilhaft variiert die Auswerte- und Steuereinheit die Intensität in Abhängigkeit von der Drehposition so, dass sich in Drehrichtung ein sinusförmiger Intensitätsverlauf ergibt.

In einer weiteren Ausgestaltung ist die Auswerte- und Steuereinheit dazu ausgebildet, eine Pulsdauer der Lichtquellen in Abhängigkeit von der momentanen Drehposition zu steuern.

In dieser Ausgestaltung werden die Lichtquellen in ihrer Leuchtdauer (Pulsdauer) gesteuert. Insbesondere werden die Lichtquellen mit einer variablen, von der Drehposition abhängigen Pulsdauer eingeschaltet, wobei die Pulsdauer kleiner ist als die Belichtungszeit der Bildaufnahmeeinheit. Durch eine Serie solcher Lichtpulse mit unterschiedlichen Pulsdauern und entsprechend unterschiedlichen Leuchtpausen lassen sich nach Art einer Pulsdauermodulation Hell-Dunkel-Muster mit verschiedenen Intensitätsverläufen auf einfache und effiziente Weise erzeugen. Vorteilhaft ist es zudem, wenn die Lichtquellen in der Drehrichtung ein variierendes Intensitätsprofil aufweisen, weil ein solches Profil einen glatteren Intensitätsverlauf ermöglicht (Vermeidung von "Treppenstufen").

In einer weiteren Ausgestaltung weist die Vorrichtung eine drehbare Werkstückaufnahme zur Positionierung des Gegenstandes in dem Inspektionsraum auf.

In dieser Ausgestaltung kann die Werkstückaufnahme den zu inspizierenden Oberflächenpunkt oder Oberflächenbereich des Gegenstandes relativ zu dem Hell-Dunkel-Muster und/oder relativ zu der Bildaumahmeeinheit bewegen. Vorteilhaft ist, dass man mit einer geringen Anzahl von starren Bildaufnahmeeinheiten auskommt, um einen Gegenstand rundherum über 360° inspizieren zu können. Bevorzugt wird eine Relativbewegung zwischen dem Hell-Dunkel-Muster und einem zu inspizierenden Oberflächenpunkt nicht mit der drehbaren Werkstückaufnahme erzeugt, sondern mit einer Variation des erzeugten Hell-Dunkel-Musters in mehreren Umläufen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine vereinfachte Darstellung eines Beispiels einer Vor- richtung zum optischen Inspizieren eines Gegenstandes, mit einem Träger- element, das einen L-förmigen Trägerwinkel aufweist,
- Fig. 2: die neue Vorrichtung mit zwei L-förmigen Trägerwinkel,
- Fig. 3: die neue Vorrichtung aus Fig. 2, wobei zwei Anordnungen von Lichtquellen unterschiedliche Abstände zu einer Drehachse des Trägerelements aufwei- sen,
- Fig. 4: ein weiteres Ausführungsbeispiel der neuen Vorrichtung mit einem Träger- element, das zwei Trägerbögen aufweist,
- Fig. 5: die neue Vorrichtung der Fig. 4 mit einer Hohlwelle, das eine Sichtöffnung für eine Kamera aufweist,
- Fig. 6: ein weiteres Ausführungsbeispiel der neuen Vorrichtung mit einem Trägerring,
- Fig. 7: eine weiteres Ausführungsbeispiel der neuen Vorrichtung mit einem Trä- gerelement, das zwei L-förmige Trägerwinkel und zwei Hohlwellen auf- weist,
- Fig. 8: die neue Vorrichtung aus Fig. 7 mit einem Trägerelement, das zwei Träger- bögen aufweist,
- Fig. 9: eine erstes Ausführungsbeispiel einer Anordnung von Lichtquellen, die eine Reihe von Lichtquellen aufweist,
- Fig. 10: eine zweites Ausführungsbeispiel einer Anordnung von Lichtquellen, die zwei Reihen von Lichtquellen aufweist,
- Fig. 11: eine drittes Ausführungsbeispiel einer Anordnung von Lichtquellen, die zwei zueinander versetzten Reihen von Lichtquellen aufweist,
- Fig. 12: eine viertes Ausführungsbeispiel einer Anordnung von Lichtquellen, die drei Reihen verschiedenfarbiger Leuchtdioden aufweist, und
- Fig. 13: einen Trägerwinkel mit Kühlrippen.

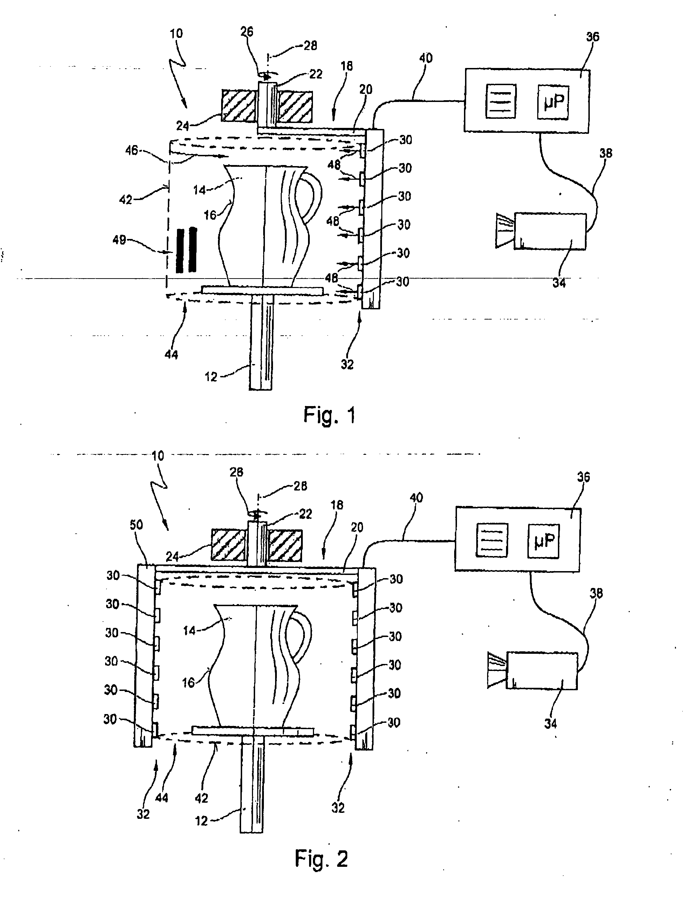

In den Figuren 1 bis 8 sind die Ausführungsbeispiele der neuen Vorrichtung in der Gesamtheit mit der Bezugsziffer 10 bezeichnet.

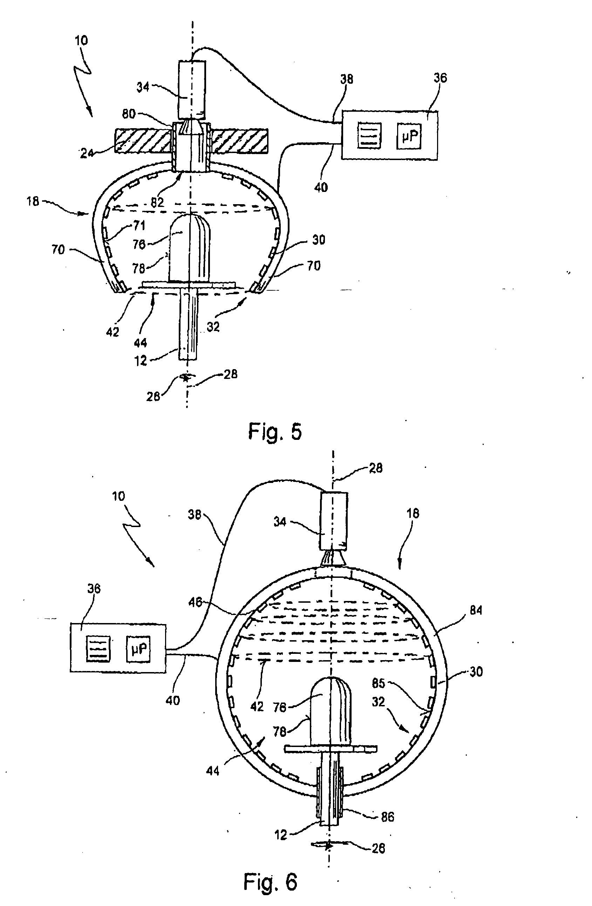

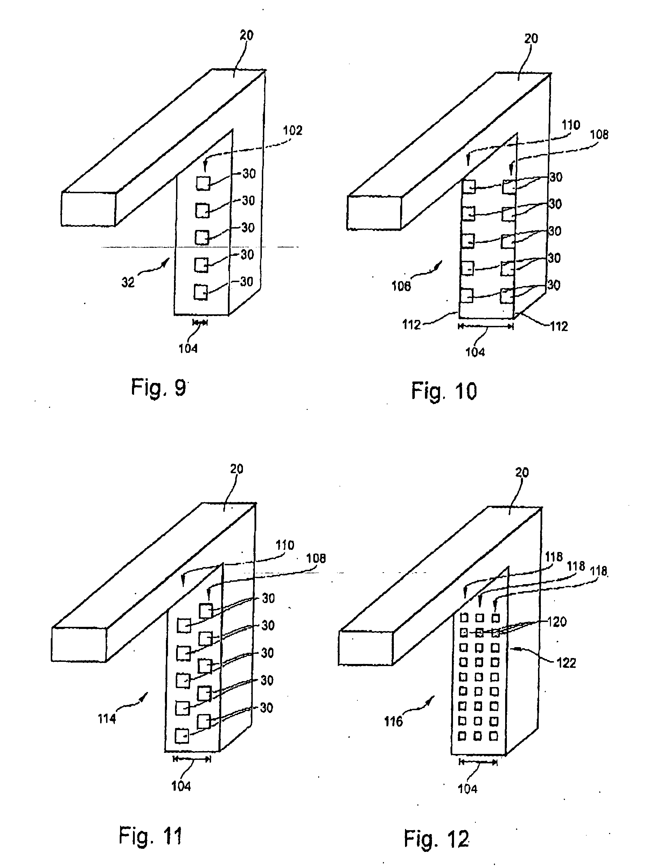

Fig. 1 zeigt ein nicht beanspruchtes Beispiel einer Vorrichtung 10 in einer vereinfachten Darstellung. Auf einer Werkstückaufnahme 12 ist ein Gegenstand 14 angeordnet, der eine Oberfläche 16 aufweist. Die Oberfläche 16 wird hier mittels eines deflektometrischen Verfahrens optisch inspiziert. Ein Trägerelement 18 weist hier einen etwa L-förmigen Trägerarm in Form eines Trägerwinkels 20 auf, der den Gegenstand 14 an zwei Seiten umrahmt. Zudem weist das Trägerelement 18 eine Welle 22 auf, die drehfest mit dem Trägerwinkel 20 verbunden ist. Die Welle 22 ist innerhalb einer Halterung 24 drehbar in Richtung eines Pfeils 26 um eine Drehachse 28 gelagert. Der Trägerwinkel 20 weist Leuchtdioden 30 auf, die in einer reihenförmigen Anordnung 32 angeordnet sind (Fig. 9). Anstelle von Leuchtdioden 30 können auch andere steuerbare Lichtquellen an dem Trägerwinkel 20 angeordnet sein. Die Anordnung 32 ist hier mit einem definierten Abstand parallel zur Drehachse 28 angeordnet, könnte prinzipiell aber auch windschief zu der Drehachse 28 sein. Eine Bildaufnahmeeinheit in Form einer Kamera 34 ist so ausgerichtet, dass sie den Gegenstand 14 quer zu der Drehachse 28 (an dem Trägerwinkel 20 vorbei) erfassen kann. Es können auch mehrere Bildaufnahmeeinheiten radial und zudem auch axial (parallel zur Drehachse 28, siehe Fig. 5) verwendet werden.

Eine Auswerte- und Steuereinheit 36 steuert das Aufnehmen von Bildern mit der Kamera 34 über eine Leitung 38. Über eine weitere Leitung 40 steuert die Auswerte- und Steuereinheit 36 die Anordnung 32 an. Die Leitung 40 kann einen Schleifring (hier nicht dargestellt) beinhalten, um eine wiederholte Drehbewegung 26 zu ermöglichen. Alternativ kann die Drehbewegung 26 als Pendelbewegung um die Drehachse 28 realisiert sein. Grundsätzlich ist auch eine drahtlose Ansteuerung der Anordnung 32 denkbar. Bevorzugt ist die Auswerte- und Steuereinheit 36 dazu ausgebildet, jede Leuchtdiode 30 einzeln in Bezug auf ihre Intensität und/oder Leuchtdauer (Pulsdauer) anzusteuern.

Bei einer Drehung des Trägerelements 18 beschreibt die Anordnung 32 eine Mantelfläche 42, welche hier als Kreiszylindermantel ausgebildet ist. Das Trägerelement 18 definiert bei der Drehung einen Inspektionsraum 44, in dem der zu inspizierende Gegenstand 14 angeordnet ist. Der Inspektionsraum 44 ergibt sich in diesem Ausführungsbeispiel ebenfalls als kreiszylinderförmiger Raum, der von der Mantelfläche 42 begrenzt wird. Die Mantelfläche 42 ist vorteilhaft eine geschlossene Mantelfläche 42 und besitzt somit eine Quererstreckung 46, die sich über 2π (360°) um die Drehachse 18 herum erstreckt. Bevorzugt ist die Drehbewegung 26 eine weitgehend kontinuierliche oder schrittweise Drehbewegung mit einer gleichbleibenden Drehrichtung um die Drehachse 28. Wie erwähnt, könnte die Drehbewegung 26 aber auch eine Pendelbewegung um die Drehachse 28 sein, wobei die Quererstreckung 46 der Mantelfläche 42 in einem solchen Fall geringer als 2n sein kann. Die Leuchtdioden 30 weisen hier jeweils eine Hauptlichtrichtung 48 auf, die in etwa orthogonal zu der Drehachse 28 liegt. Dementsprechend beleuchten die Leuchtdioden 30 den Gegenstand 14 hier im Wesentlichen nur von der Seite. Für eine deflektometrische Inspektion haben die Leuchtdioden 30 vorzugsweise eine Strahlungscharakteristik in Form eines Lambert-Strahlers. Vorteilhaft kann auch eine Streuscheibe zwischen den Leuchtdioden 30 und der Drehachse 28 an dem Trägerelement angeordnet sein.

Für den Einsatz der Vorrichtung 10 zum optischen Inspizieren des Gegenstandes 14 wird das Trägerelement 18 in eine Drehung um die Drehachse 28 versetzt. Gleichzeitig wird die Anordnung 32 von der Auswerte- und Steuereinheit 36 derart gesteuert, dass sich auf der Mantelfläche 42 aufgrund der Drehbewegung ein Hell-Dunkel-Muster 49 ergibt, dessen Erstreckung in der Querrichtung 46 wesentlich größer ist als die Quererstreckung der Anordnung 32 in der Drehrichtung (siehe Fig. 9, Bezugsziffer 104). Das Hell-Dunkel-Muster ist aus Gründen der Übersichtlichkeit nur ausschnittsweise dargestellt. Zu diesem Zweck werden die Leuchtdioden 30 in Abhängigkeit von ihrer momentanen Drehposition, also ihrer Winkellage zu der Drehachse 28, in ihrer Intensität gesteuert. In einigen Beispielen werden die Leuchtdioden 30 so angesteuert, dass sich entlang der Quererstreckung 46 ein periodischer Intensitätsverlauf ergibt, der vorzugsweise sinusförmig ist. Prinzipiell sind jedoch auch andere Hell-Dunkel-Muster möglich. Vorteilhaft für eine großflächige Inspektion der Oberfläche 16 sind schachbrettartige Hell-Dunkel-Muster mit periodischen Intensitätsverläufen in zwei orthogonalen Richtungen.

In einigen Beispielen werden die Leuchtdioden 30 pulsartig angesteuert, so dass sie während der Drehung an definierten Drehpositionen jeweils nur kurz aufblitzen. In einigen Beispielen steuert die Auswerte- und Steuereinheit 36 die Leuchtdioden 30 in Abhängigkeit von der Drehposition des Trägerelements 18 nach Art einer Pulsdauermodulation an, wobei die jeweilige Pulsdauern die Lichtintensität des Hell-Dunkel-Musters 49 an der entsprechenden Drehposition bestimmt. Durch eine Folge solcher Lichtpulse lässt sich auf der Mantelfläche ein Hell-Dunkel-Muster mit einem variierenden Intensitätsverlauf erzeugen. Von Vorteil ist es, wenn die Leuchtdioden eine in Drehrichtung ausgedehnte Lichtverteilung mit einem ansteigenden und/oder abfallenden Profil haben, da dies die Erzeugung von kontinuierlichen Intensitätsverläufen in dem Hell-Dunkel-Muster erleichtert.

Für eine deflektometrische Inspektion der Oberfläche 16 ist es von Vorteil, wenn die Auswerte- und Steuereinheit 36 die Leuchtdioden 30 so ansteuert, dass sich das Hell-Dunkel-Muster 49 relativ zu der Oberfläche 16 bewegt. Dies kann erreicht werden, indem die Auswerte- und Steuereinheit 36 zusätzlich auch die Werkstückaufnahme 12 ansteuert und in eine Drehbewegung um die Drehachse 28 oder um eine andere Drehachse (hier nicht dargestellt) versetzt. Bevorzugt ist die Auswerte- und Steuereinheit 36 aber dazu ausgebildet, das Trägerelement 20 mehrfach um den Gegenstand zu drehen, wobei das Hell-Dunkel-Muster in jedem Umlauf verschoben wird, so dass sich bei der wiederholten Drehbewegung variable Hell-Dunkel-Muster 49 ergeben, die einem relativ zu dem Gegenstand 14 bewegten Hell-Dunkel-Muster entsprechen.

In einigen Beispielen ist die Auswerte- und Steuereinheit 36 dazu ausgebildet, zumindest drei Bilder (vorzugsweise vier oder mehr Bilder) für jeden Oberflächenpunkt der zu inspizierenden Oberfläche 16 aufzunehmen, wobei die zumindest drei Bilder eine Bilderserie bilden. Die Bilderserie zeigt den Oberflächenpunkt in unterschiedlichen Relativpositionen zu dem Hell-Dunkel-Muster 49 und insbesondere in unterschiedlichen Relativpositionen zu einem periodischen Intensitätsverlauf in dem Hell-Dunkel-Muster 49. Bevorzugt zeigen die Bilder der Bilderserie eine ganzzahlige Anzahl von Perioden des Intensitätsverlaufs (zum Beispiel eine Periode von 0 bis 2π oder 2 Perioden von Null bis 4π) und die Bilder sind in gleichen Abständen voneinander in Bezug auf den Intensitätsverlauf aufgenommen (zum Beispiel bei π, 2π, 3π und 4π für den Fall von 2 Perioden des Intensitätsverlaufs in der Bilderserie). Die Auswerte- und Steuereinheit 36 ist in diesen Fällen dazu ausgebildet, die jeweilige Phasenlage des Intensitätsverlaufs relativ zu dem Oberflächenpunkt zu bestimmen. Da diese Phasenlage mit der lokalen Neigung des Oberflächenpunktes korreliert, lassen sich Kratzer, Lunker und andere Oberflächedefekte automatisiert detektieren.

Fig. 2 zeigt die neue Vorrichtung 10 mit einem zusätzlichen, zweiten Trägerarm in Form eines Trägerwinkels 50 mit einer weiteren Anordnung 32 aus Leuchtdioden 30. Der zweite Trägerwinkel 50 entspricht in seiner Bauart dem Trägerwinkel 20 und ist hier diametral zu dem Trägerwinkel 20 angeordnet. Die Vorrichtung 10 könnte auch noch weitere Trägerarme besitzen, die rund um die Drehachse 28 verteilt sind. Auf diese Weise wird erreicht, dass das Hell-Dunkel-Muster 49 auf der Mantelfläche 42 mit höherer Helligkeit und besserem Kontrast erzeugt wird. In einigen Ausführungsbeispielen steuert die Auswerte- und Steuereinheit 36 die Leuchtdioden 30 an den Trägerwinkeln 20, 50 zeitlich versetzt zueinander so an, dass der zeitliche Versatz dem Winkelversatz der Trägerwinkel 20, 50 in der Drehbewegung entspricht. In diesem Fall kann jeder Trägerwinkel 20, 50 an gleicher Drehwinkelposition denselben Musterausschnitt erzeugen, was zur Folge hat, dass an der jeweiligen Drehwinkelposition eine höhere Lichtmenge (insbesondere doppelte Lichtmenge bei zwei Trägerwinkeln, vierfache Lichtmenge bei vier Trägerwinkeln) für die Mustererzeugung zur Verfügung steht. Weiterhin wird mit den zwei (oder noch weiteren) Trägerwinkeln 20, 50 eine Unwucht bei der Drehung des Trägerelements 18 vermieden, wodurch sich eine höhere Exaktheit beim Inspizieren und eine höhere Lebensdauer durch geringeren Verschleiß der Vorrichtung 10 ergibt.

In einem Ausführungsbeispiel werden alle Leuchtdioden 30 einer Anordnung 32 zeitgleich und mit gleicher Intensität angesteuert. Man benötigt in diesem Fall nur einen Schleifring für jede Anordnung. Wenn die Anordnungen jeweils senkrecht stehen, wie in Fig. 2 gezeigt, kann man in diesem Fall allerdings nur Muster mit senkrechten Streifen auf der Mantelfläche 42 erzeugen. Daher ist es von Vorteil, wenn die Vorrichtung zwei Trägerwinkel 20, 50 besitzt, die diametral zueinander angeordnet, jedoch relativ zur Drehachse geneigt oder gekippt sind. Vorteilhaft ist eine der beiden Anordnungen 32 in Drehrichtung 26 geneigt und die andere ist gegen die Drehrichtung 26 geneigt. Mit anderen Worten verlaufen die vertikalen Arme der Trägerwinkel 20, 50 in dieser Variante nicht parallel zu der Drehachse, sondern windschief dazu. Vorzugsweise liegen die beiden Anordnungen 32 jedoch parallel zueinander, um gegensätzliche Neigungen in Bezug auf die Drehrichtung 28 zu erzielen. Beispielsweise könnten die beiden unteren freien Enden der in Fig. 2 gezeigten Trägerarme so geneigt sein, dass sie jeweils aus der Papierebene hinausstehen, während die oberen Enden in der Papierebene liegen. Das untere freie Ende der in Fig. 2 linken Trägerarms würde dann in der Drehbewegung vorlaufen, das untere freie Ende des rechten Trägerarms würde in der Drehbewegung 26 nachlaufen.

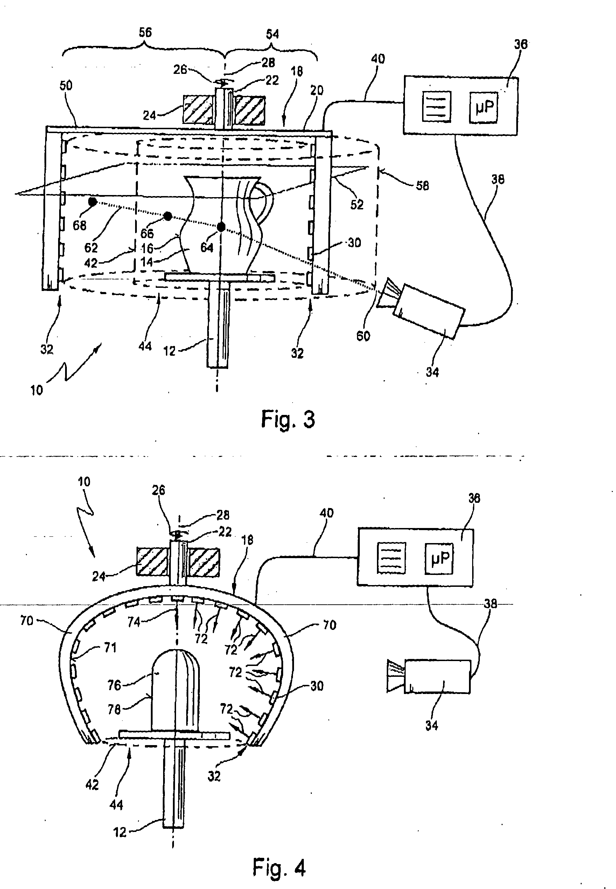

In einem bevorzugten Fall ist die eine Anordnung in Drehrichtung um 45° nach vorne geneigt, während die andere Anordnung um 45° nach hinten geneigt ist. Wenn man in diesem Fall alle Leuchtdioden jeder Anordnung gleichzeitig einschaltet, entstehen helle Streifen, der auf dem virtuellen Innenmantel 42 um +45° und -45° schräg zu der Ebene stehen, die senkrecht zur Drehachse 28 liegt. Mit dieser Anordnung ist es möglich, schräg stehende Streifenmuster auf der inneren Mantelfläche 42 zu erzeugen, indem man alle Leuchtdioden 30 einer Anordnung 32 synchron und intensitätsgleich zueinander ansteuert. In einer anderen Variante ist ein Trägerarm um 60° geneigt und der andere Trägerarm ist um 30° geneigt, um dementsprechend Streifen mit 30° und 60° relativ zu der Drehachse 28 bzw. der Ebene senkrecht zur Drehachse 28 zu erhalten. Wie leicht einzusehen ist, sind auch andere Neigungswinkel möglich, wenngleich eine Neigung von +45°/-45° bezogen auf die Drehrichtung 26 aus heutiger Sicht bevorzugt sind, da in diesem Fall zwei gekreuzte Streifenmuster mit einer Neigung von jeweils 45° für viele Anwendungen optimal sind. In den Fig. 3 bis 8 ist aus Gründen der Übersichtlichkeit jeweils nur eine Leuchtdiode 30 exemplarisch mit einem Bezugszeichen versehen.

Fig. 3 zeigt eine Vorrichtung ähnlich zu der aus Fig. 2, wobei der zweite Trägerwinkel 50 weiter von der Drehachse 28 beabstandet ist als der erste Trägerwinkel 20. Die unterschiedlichen Abstände ergeben sich in einer Ebene 52, welche sich orthogonal zur Drehachse 28 erstreckt. Ein erster Abstand zwischen der Drehachse 28 und der Leuchtdiode 30, die in der Ebene 52 am ersten Trägerwinkel 20 angeordnet ist, ist hier mit der Bezugsziffer 54 bezeichnet. Ein zweiter Abstand 56 ergibt sich zwischen der Drehachse 28 und der Leuchtdiode 30, die an dem zweiten Trägerwinkel 50 angeordnet ist und in der Ebene 52 liegt, Aufgrund der hier L-förtnigen Ausgestaltung der Trägerwinkel 20 und 50 ergeben sich die Abstände 54 und 56 paarweise für alle Leuchtdioden 30 der Trägerwinkel 20 und 50. Somit definiert die Anordnung 32 des ersten Trägerwinkel 20 die erste Mantelfläche 42. Die Anordnung 32 des zweiten Trägerwinkel 50 definiert eine zweite Mantelfläche 58, welche konzentrisch zu der ersten Mantelfläche 42 angeordnet ist und diese vollständig umschließt. Die zweite Mantelfläche 58 ist hier als Kreiszylindermantel ausgestaltet, der die gleiche Höhe wie die erste Mantelfläche 42 aufweist und sich nur im Durchmesser von der ersten Mantelfläche 42 unterscheidet.

Über einen ersten optischen Pfad 60 betrachtet die Kamera 34 einen Oberflächenpunkt 64 auf der Oberfläche 16. Über die Oberfläche 16 wird entlang eines optischen Pfads 62 entweder das Hell-Dunkel-Muster der ersten Mantelfläche 42 in einem Punkt 66 betrachtet oder das Hell-Dunkel-Muster der zweiten Mantelfläche 58 in einem zweiten Punkt 68. Die Auswahl erfolgt in Abhängigkeit der momentanen Drehposition des Trägerelements 18 beim Aufnehmen der Bilder. Aufgrund der unterschiedlichen räumlichen Positionen der Punkte 66 und 68 können nacheinander Bilder mittels der Kamera 34 aufgenommen werden. Trotz unveränderter Positionen der Kamera 34 und des Gegenstandes 16 führt dies dazu, dass die mit den Bildern aufgenommenen Hell-Dunkel-Muster zwischen dem ersten und dem zweiten Bild relativ zu dem Gegenstand radial und damit in der Entfernung verschoben erscheinen. Somit wird beim Aufnehmen der Bilder eine Abstandsvariation eines Hell-Dunhel-Musters zu dem Gegenstand möglich. Eine solche Abstandsvariation ermöglicht es, die absolute Position des betrachteten Oberflächenpunktes 64 zu bestimmen und somit eine Formmessung in Ergänzung zu der Inspektion der Oberfläche durchzuführen. Vorteilhaft ist die Auswerte- und Steuereinheit 36 dementsprechend ausgebildet.

In einer Variante dieses Ausführungsbeispiels wird durch Ansteuerung der Leuchtdioden 30 auf der äußeren Mantelfläche 58 ein äußeres Muster erzeugt, das eine im Verhältnis der Abstände 54, 56 vergrößerte Version des inneren Musters auf der inneren Mantelfläche 42 ist. Anders ausgedrückt besitzen das innere und das äußere Muster aus Sicht des Messobjekts bzw. aus Sicht der Kamera 34 scheinbar gleiche Streifenbreiten und Streifenrichtungen. Diese Variante ist besonders vorteilhaft, um 3D-Messungen an Gegenständen 14 durchzuführen, deren Oberfläche 16 eher streuend und wenig glänzend ist. Die Genauigkeit der Formmessung ist in diesem Fall um so größer, je größer die Radien der beiden Mantelflächen 42, 58 im Vergleich zu dem Gegenstand sind und je stärker sich die Radien der beiden Mantelflächen 42, 58 voneinander unterscheiden. Vorteilhaft können die Leuchtdioden 30 am inneren Trägerarm parallel zur Drehachse 28 dichter zueinander angeordnet sein als an dem äußeren Trägerarm, um die unterschiedlichen Mustergrößen zu realisieren.

Fig. 4 zeigt ein weiteres Ausführungsbeispiel der Vorrichtung 10. Dieses Ausführungsbeispiel weist zwei knicklos gebogene Trägerarme in Form von Trägerbögen 70 auf. Die Trägerbögen 70 sind einteilig ausgeführt und bilden gemeinsam eine Ω-artige Klammer. An einer Innenseite 71 der Trägerbögen 70 sind Leuchtdioden 30 angeordnet. Außerhalb der Drehachse 28 befinden sich Leuchtdioden 30, die alle eine Hauptlichtrichtung 72 aufweisen, die quer zur Drehachse 28 angeordnet sind. Die Leuchtdioden 30 eines Trägerbogens 70 haben alle in diesem Fall unterschiedliche Hauptlichtrichtungen 72. In der Drehachse 28 ist eine Leuchtdiode 74 angeordnet, welche eine Hauptlichtrichtung 74 aufweist. Die Hauptlichtrichtung 74 verläuft in Richtung und entlang der Drehachse 28.

Durch diese Anordnung 32 mit Leuchtdioden 30, die einen Gegenstand 76 klammerartig umgeben wird erreicht, dass der Gegenstand 76 mit einer gekrümmten Oberfläche 78 nahezu rundum mit einem damit geeigneten Hell-Dunkel-Muster inspiziert werden kann.

Fig. 5 zeigt die Vorrichtung 10 aus Fig. 4, wobei die Kamera 34 nun jedoch auf der Drehachse 28 angeordnet ist und durch das Trägerelement 18 hindurch auf den Gegenstand 76 schaut. Diese Position der Kamera 34 wird dadurch ermöglicht, dass die Lagerung des Trägerelements 18 in der Halterung 24 mittels einer Hohlwelle 80 erfolgt. Die Hohlwelle 80 weist eine Sichtöffnung 82 für die Kamera 34 auf. Auf diese Weise wird ermöglicht, dass eine gekrümmte Oberflächen 78 des Gegenstandes 76 in Richtung der Drehachse 28 inspiziert werden kann. Vorteilhaft können weitere Kameras 34 radial (seitlich) von der Drehachse 28 angeordnet sind, wie dies in den Fig. 1 und 2 gezeigt ist.

Fig. 6 zeigt ein weiteres Ausführungsbeispiel der neuen Vorrichtung 10 mit zwei Trägerarmen in Form eines einteiligen Trägerrings 84, Innerhalb des Trägerrings 84 sind Leuchtdioden 30 angeordnet, die sich in den bevorzugten Ausführurigsbeispielen so weit wie möglich an einer Innenseite 85 des Trägerrings 84 erstrecken. Der Trägerring 84 ist mittels einer Lagerbuchse 86 an der Werkstückaufnahme 12 drehbar gelagert. Diametral gegenüber von der Lagerbuchse 86 liegt die Sichtöffnung 82, so dass die Kamera 34 ungestört durch den Trägerring 84 hindurch Bilder aufnehmen kann. Der Trägerring 84 bildet als Trägerelement 80 einen sphärischen Inspektionsraum 44, der von einer teilsphärischen Mantelfläche 42 begrenzt wird. Prinzipiell ist auch eine asphärische Mantelfläche möglich.

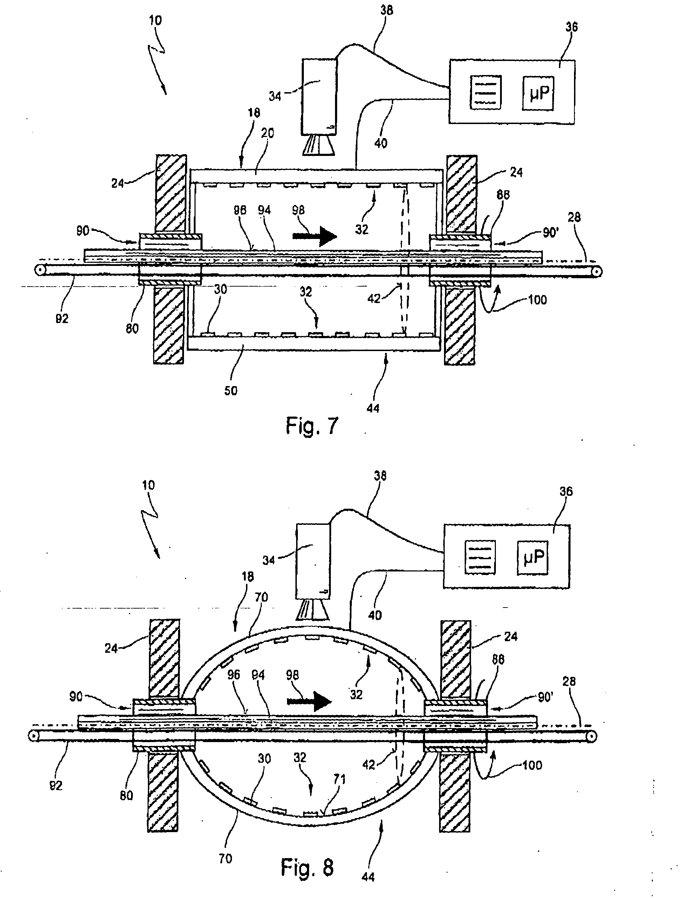

Fig. 7 zeigt ein weiteres Ausführungsbeispiel der neuen Vorrichtung 10. In diesem Ausführungsbeispiel liegt die Drehachse 28 waagerecht. Das Trägerelement 18 ist mittels einer ersten Hohlwelle 80 und einer zweiten Hohlwelle 88 drehbar in zwei Halterungen 24 gelagert. Die Hohlwelle 80 weist eine Beladeöffnung 90 auf, durch die ein Förderband 92 hindurchgeführt ist. Das Förderband 92 tritt dann, parallel zur Drehachse 28, durch den Inspektionsraum 44 hindurch und anschließend durch eine Entladeöffnung 90' der zweiten Hohlwelle 88 aus dem Inspektionsraum 44 aus. Auf dem Förderband 92 ist ein stangenförmiger Gegenstand 94 angeordnet, der eine zu inspizierende Oberfläche 96 aufweist.

Der Gegenstand 94 wird mittels der Vorrichtung 10 optisch inspiziert. Zu diesem Zweck wird der Gegenstand 94 in Richtung eines Pfeils 98 mittels des Förderbands 92 durch den Inspektionsraum 44 hindurch bewegt. Zu Mustererzeugung wird das Trägerelement 18 in Richtung eines Pfeils 100 um die Drehachse 28 gedreht, so dass wiederum die Mantelfläche 42 definiert wird, auf der Hell-Dunkel-Muster entstehen. Auf diese Weise wird es möglich, lange Gegenstände 94, die nicht in den Inspektionsraum 44 passen, stückweise optisch mittels der neuen Vorrichtung 10 zu inspizieren.

Fig. 8 zeigt eine Vorrichtung 10 ähnlich zu der aus Fig. 7. Im Unterschied zur Vorrichtung aus Fig. 7 sind die Trägerarme hier wieder als Trägerbögen 70 ausgebildet. Die Trägerbögen 70 definieren einen Teilellipsoiden als Inspektionsraum 44, wobei die Anordnungen 32 die Mantelfläche 42 teilellipsoid definieren. Dadurch ergibt sich wieder der Vorteil, dass auf einfache Weise verschiedene Hauptlichtrichtungen zum Inspizieren des Gegenstandes 94 eingesetzt werden können.

Fig. 9 zeigt den Trägerwinkel 20 aus Fig. 1. Der Trägerwinkel 20 weist die Anordnung 32 bestehend aus einer Vielzahl von Leuchtdioden 30 auf. Die Leuchtdioden 30 sind in der Anordnung 32 innerhalb einer Reihe oder Linie 102 angeordnet. Die Anordnung 32 besitzt somit eine erste Quererstreckung 104, welche der Breite einer Leuchtdiode 30 entspricht. Diese Anordnung 32 besitzt den Vorteil, dass sie sehr kostengünstig realisiert werden kann.

Fig. 10 zeigt ein weiteres Ausführungsbeispiel des Trägerwinkels 20 mit einer Anordnung 106. Die Anordnung 106 besteht aus einer ersten Reihe 108 von Leuchtdioden 30 und einer zweiten Reihe 110 von Leuchtdioden 30. Die Leuchtdioden 30 der beiden Reihen 108 und 110 sind paarweise in Drehrichtung angeordnet. Weiter sind die beiden Reihen 108 und 110 jeweils an dem äußeren Rand 112 des Trägerwinkels angeordnet. Die Anordnung 106 besitzt den Vorteil, dass sie ein Hell-Dunkel-Muster erzeugen kann, welches heller ist als dies bei der Verwendung von nur einer Leuchtdiode 30 in Drehrichtung möglich ist. Vorteilhaft werden die Leuchtdioden der Reihe 108 in der Drehbewegung zeitlich versetzt zu den Leuchtdioden der Reihe 110 angesteuert, so dass die Leuchtdioden der Reihe 110 jeweils dann dieselbe Intensität abstrahlen wie die Leuchtdioden der Reihe 108, wenn sie die vorherige Position der Leuchtdioden der Reihe 108 erreichen. Die Randlage der Leuchtdioden 30 besitzt den weiteren Vorteil, dass der Trägerwinkel das Licht der Leuchtdioden aus den beiden Reihen 108,110 in unsymmetrischer (unterschiedlicher) Weise gegen die Kamera 34 abschattet. Der Winkelbereich, in dem weder eine Leuchtdiode der Reihe 108 noch eine Leuchtdiode der Reihe 110 ein auswertbares Lichtsignal liefern kann, ist daher minimal.

Fig. 11 zeigt ein weiteres Ausführungsbeispiel des Trägerwinkels 20 mit einer Anordnung 114. Die Anordnung 114 besteht aus der ersten Reihe 108 und der zweiten Reihe 110 von Leuchtdioden 30. Die Leuchtdioden 30 der beiden Reihen 108 und 110 sind in der Anordnung 114 in Richtung der Drehachse 28 versetzt. Auf diese Weise wird eine höhere Auflösung des Hell-Dunkel-Musters in Richtung der Drehachse 28 realisiert, als dies mit einer Reihe 102 möglich wäre. Dies ist insbesondere dann von Vorteil, wenn die von den Leuchtdioden 30 erzeugten Hell-Dunkel-Muster zumindest teilweise in Richtung der Drehachse verändert, bildlich gesprochen bewegt, werden soll.

Fig. 12 zeigt ein weiteres Ausführungsbeispiel des Trägerwinkels 20 mit einer Anordnung 116. Die Anordnung 116 besteht aus drei Reihen 118 von farbigen Leuchtdioden 120. Alle drei Reihen 118 sind so zueinander angeordnet, dass sich eine zweidimensionale Matrix bestehend aus farbigen Leuchtdioden 120 ergibt. Dabei sind die Leuchtdioden 120 in Gruppen 122 bestehend aus drei Leuchtdioden 120 mit unterschiedlichen Lichtspektren zusammengefasst. Der Einsatz von mehrfarbigen Leuchtdioden 120 ermöglicht das Erzeugen von farbigen Hell-Dunkel-Mustern für das optische Inspizieren des Gegenstandes.

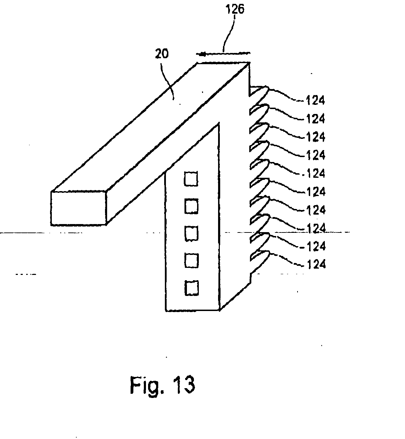

Fig. 13 zeigt ein weiteres Ausführungsbeispiel des Trägerwinkels 20, welches radial zur Drehachse 28 Kühlrippen 124 aufweist. Die Kühlrippen 124 besitzen alle eine Haupterstreckung 126 in Drehrichtung. Somit ergibt sich eine lamellenartige Struktur, welche in Richtung der Drehachse aufeinander geschichtet ist. Damit wird ermöglicht, dass bei Drehung des Trägerelements 18 Luft zwischen den Kühlrippen 124 hindurchströmt, um das Trägerelement 18 und somit auch die Leuchtdioden effizient zu kühlen.

Bei der erfindungsgemäßen Vorrichtung 10 ist mindestens eine Lichtquelle 30 erforderlich, es können jedoch auch mehrere Lichtquellen 30 vorhanden sein. Wenn als Anzahl von Lichtquellen 30 nur eine einzige Lichtquelle 30 vorgesehen ist, bildet diese eine einzige Lichtquelle 30 eine Anordnung 32 aus einer einzigen Lichtquelle 30. Dies gilt analog auch für die Lichtquelle 120 und Anordnung 106, 114 oder 116.

## Patentansprüche

1. Vorrichtung (10) zum optischen Inspizieren eines Gegenstandes (14, 76, 94), mit
- einem Trägerelement (18), das drehbar um eine Drehachse (28) gelagert ist, die eine Drehrichtung (26, 100) definiert,
- einer Anzahl von Lichtquellen (30, 120), die an dem Trägerelement (18) angeordnet sind und eine Anordnung (32, 106, 114, 116) von Lichtquellen (30, 120) bilden,
- zumindest einer Bildaufnahmeeinheit (34) zum Aufnehmen einer Anzahl von Bildern von dem Gegenstand (14, 76, 94), und
- einer Auswerte- und Steuereinheit (36), die dazu ausgebildet ist, Eigenschaften des Gegenstandes (14, 76, 94) anhand der Bilder zu bestimmen,
wobei das Trägerelement (18) bei einer Drehung in der Drehrichtung (26, 100) einen Inspektionsraum (44) zur Aufnahme des Gegenstandes (14, 76, 94) definiert, wobei die Anordnung (32, 106, 114, 116) bei der Drehung eine Mantelfläche (42, 58) mit einer ersten Quererstreckung (46) in der Drehrichtung (26, 100) definiert, und wobei die Anordnung (32, 106, 114, 116) eine zweite Quererstreckung (104) in der Drehrichtung (26, 100) besitzt, die kleiner ist als die erste Quererstreckung (46), **dadurch gekennzeichnet, dass** die Auswerte- und Steuereinheit (36) ferner dazu ausgebildet ist, die Lichtquellen (30, 120) in Abhängigkeit von einer momentanen Drehposition des Trägerelements (18) in der Drehrichtung (26, 100) anzusteuern, um auf der gesamten Mantelfläche (42, 58) ein variables Hell-Dunkel-Muster (49) mithilfe der Lichtquellen (30, 120) zu erzeugen, und wobei das Trägerelement (18) einen ersten und einen zweiten Trägerarm (20, 50, 70, 84) aufweist, die jeweils eine Anordnung (32, 106, 114, 116) von Lichtquellen (30,120) tragen, wobei der erste und der zweite Trägerarm (20, 50, 70, 84) in Drehrichtung (26, 100) versetzt zueinander angeordnet sind.

2. Vorrichtung (10) nach Anspruch 1, **dadurch gekennzeichnet, dass** die Anordnungen (32, 106, 114, 116) des ersten und des zweiten Trägerarms (20, 50, 70, 84) mit verschiedenen radialen Abständen (54, 56) zu der Drehachse (28) angeordnet sind.

3. Vorrichtung (10) nach einem der Ansprüche 1 bis 2, **gekennzeichnet durch** einen Abstandshalter mit einer variablen Länge, die den radialen Abstand (54, 56) der
Anordnung (32, 106, 114, 116) zu der Drehachse (28) definiert.

4. Vorrichtung (10) nach einem der Ansprüche 1 bis 3, **dadurch gekennzeichnet, dass** das Trägerelement (18) einen Trägerbogen (70) mit einer gekrümmten Innenseite (71) aufweist, entlang der die Lichtquellen (30, 120) angeordnet sind.

5. Vorrichtung (10) nach einem der Ansprüche 1 bis 4, **dadurch gekennzeichnet, dass** das Trägerelement (18) einen weitgehend geschlossenen Trägerring (84) mit einer Innenseite (85) aufweist, an der die Lichtquellen (30, 120) angeordnet sind.

6. Vorrichtung (10) nach einem der Ansprüche 1 bis 5, **dadurch gekennzeichnet, dass** das Trägerelement (18) zumindest eine Hohlwelle (80, 88) aufweist, an der das Trägerelement (18) drehbar gelagert ist.

7. Vorrichtung (10) nach Anspruch 6, **dadurch gekennzeichnet, dass** die Bildaufnahmeeinheit (34) die Bilder durch die Hohlwelle (80) aufnimmt.

8. Vorrichtung nach Anspruch 6 oder 7, **dadurch gekennzeichnet, dass** die Hohlwelle (80) eine Beladeöffnung (90) zum Einbringen des Gegenstandes (94) in den Inspektionsraum (44) bildet.

9. Vorrichtung (10) nach einem der Ansprüche 1 bis 8, **gekennzeichnet durch** Kühlrippen (124), die an dem Trägerelement (18) ausgebildet sind und jeweils eine Haupterstreckung (126) in der Drehrichtung (46) besitzen.

10. Vorrichtung (10) nach einem der Ansprüche 1 bis 9, **dadurch gekennzeichnet, dass** die Auswerte- und Steuereinheit (36) dazu ausgebildet ist, die Bildaufnahmeeinheit (34) anzusteuern, um die Bilder von dem Gegenstand (14, 76, 94) in Abhängigkeit von der momentanen Drehposition aufzunehmen.

11. Vorrichtung nach einem der Ansprüche 1 bis 10, **dadurch gekennzeichnet, dass** die Auswerte- und Steuereinheit (36) dazu ausgebildet ist, eine Intensität der Lichtquellen (30, 120) in Abhängigkeit von der momentanen Drehposition zu steuern.

12. Vorrichtung nach einem der Ansprüche 1 bis 11, **dadurch gekennzeichnet, dass** die Auswerte- und Steuereinheit (36) dazu ausgebildet ist, eine Pulsdauer der Lichtquellen (30, 120) in Abhängigkeit von der momentanen Drehposition zu steuern.

13. Vorrichtung nach einem der Ansprüche 1 bis 12, **gekennzeichnet durch** eine drehbare Werkstückaufnahme (12) zur Positionierung des Gegenstandes (14, 76) in dem Inspektionsraum (44).

14. Verfahren zum optischen Inspizieren eines Gegenstandes (14, 76, 94), mit den Schritten:
- Bereitstellen eines Trägerelements (18), das drehbar um eine Drehachse (28) gelagert ist, die eine Drehrichtung (26, 100) definiert,
- Bereitstellen einer Anzahl von Lichtquellen (30, 120), die an dem Trägerelement (18) angeordnet sind und eine Anordnung (32, 106, 114, 116) von Lichtquellen (30, 120) bilden,
- Aufnehmen einer Anzahl von Bildern von dem Gegenstand (14, 76, 94),
- Drehen des Trägerelements (18) in der Drehrichtung (26, 100), und
- Bestimmen von Eigenschaften des Gegenstandes (14, 76, 94) anhand der Bilder,
wobei das Trägerelement (18) bei einer Drehung in der Drehrichtung (26, 100) einen Inspektionsraum (44) zur Aufnahme des Gegenstandes (14, 76, 94) definiert, wobei die Anordnung (32, 106, 114, 116) bei der Drehung eine Mantelfläche (42, 58) mit einer ersten Quererstreckung (46) in der Drehrichtung (26, 100) definiert, und wobei die Anordnung (32, 106, 114, 116) eine zweite Quererstreckung (104) in der Drehrichtung (26, 100)) besitzt, die kleiner ist als die erste Quererstreckung (46), **dadurch gekennzeichnet, dass** die Lichtquellen (30, 120) in Abhängigkeit von einer momentanen Drehposition des Trägerelements (18) in der Drehrichtung (26, 100) angesteuert werden, um auf der gesamten Mantelfläche (42, 58) ein variables Hell-Dunkel-Muster (49) mithilfe der Lichtquellen (30, 120) zu erzeugen, und wobei das Trägerelement (18) einen ersten und einen zweiten Trägerarm (20, 50, 70, 84) aufweist, die jeweils eine Anordnung (32, 106, 114, 116) von Lichtquellen (30,120) tragen, wobei der erste und der zweite Trägerarm (20, 50, 70, 84) in Drehrichtung (26, 100) versetzt zueinander angeordnet sind.

## Claims

1. Apparatus (10) for optically inspecting an object (14, 76, 94), having
- a carrier element (18), which is mounted rotatably about a rotational axis (28) which defines a rotational direction (26, 100),
- a number of light sources (30, 120), which are arranged on the carrier element (18) and form an arrangement (32, 106, 114, 116) of light sources (30, 120),
- at least one image recording unit (34) for recording a number of images of the object (14, 76, 94) and
- an evaluation and control unit (36) which is configured to determine properties of the object (14, 76, 94) on the basis of the images,
wherein the carrier element (18) defines, when rotating in the rotational direction (26, 100), an inspection space (44) for recording the object (14, 76, 94), wherein the arrangement (32, 106, 114, 116) defines, during the rotation, a lateral surface (42, 58) having a first transverse extent (46) in the rotational direction (26, 100), and wherein the arrangement (32, 106, 114, 116) has a second transverse extent (104) in the rotational direction (26, 100) which is smaller than the first transverse extent (46), **characterized in that** the evaluation and control unit (36) is furthermore configured to drive the light sources (30, 120) in the rotational direction (26, 100) in dependence on an instantaneous rotational position of the carrier element (18) in order to produce a variable light-dark pattern (49) on the entire lateral surface (42, 58) using the light sources (30, 120), and wherein the carrier element (18) has a first and a second carrier arm (20, 50, 70, 84), which each carry an arrangement (32, 106, 114, 116) of light sources (30, 120), wherein the first and the second carrier arm (20, 50, 70, 84) are arranged offset with respect to one another in the rotational direction (26, 100).

2. Apparatus (10) according to Claim 1, **characterized in that** the arrangements (32, 106, 114, 116) of the first and of the second carrier arm (20, 50, 70, 84) are arranged at different radial distances (54, 56) from the rotational axis (28).

3. Apparatus (10) according to one of Claims 1 to 2, **characterized by** a spacer of a variable length which defines the radial distance (54, 56) of the arrangement (32, 106, 114, 116) from the rotational axis (28).

4. Apparatus (10) according to one of Claims 1 to 3, **characterized in that** the carrier element (18) has a carrier arc (70) having a curved inner side (71), along which the light sources (30, 120) are arranged.

5. Apparatus (10) according to one of Claims 1 to 4, **characterized in that** the carrier element (18) has a largely closed carrier ring (84) having an inner side (85), on which the light sources (30, 120) are arranged.

6. Apparatus (10) according to one of claims 1 to 5, **characterized in that** the carrier element (18) has at least one hollow shaft (80, 88), on which the carrier element (18) is rotatably mounted.

7. Apparatus (10) according to Claim 6, **characterized in that** the image recording unit (34) records the images through the hollow shaft (80).

8. Apparatus according to Claim 6 or 7, **characterized in that** the hollow shaft (80) forms a loading opening (90) for introducing the object (94) into the inspection space (44).

9. Apparatus (10) according to one of Claims 1 to 8, **characterized by** cooling ribs (124), which are formed on the carrier element (18) and in each case have a main extent (126) in the rotational direction (46).

10. Apparatus (10) according to one of Claims 1 to 9, **characterized in that** the evaluation and control unit (36) is configured to drive the image recording unit (34) in order to record the images of the object (14, 76, 94) in dependence on the instantaneous rotational position.

11. Apparatus according to one of Claims 1 to 10, **characterized in that** the evaluation and control unit (36) is configured to control an intensity of the light sources (30, 120) in dependence on the instantaneous rotational position.

12. Apparatus according to one of Claims 1 to 11, **characterized in that** the evaluation and control unit (36) is configured to control a pulse duration of the light sources (30, 120) in dependence on the instantaneous rotational position.

13. Apparatus according to one of Claims 1 to 12, **characterized by** a rotatable workpiece receiving element (12) for positioning the object (14, 76) in the inspection space (44).

14. Method for optically inspecting an object (14, 76, 94), having the steps of:
- providing a carrier element (18), which is mounted rotatably about a rotational axis (28) which defines a rotational direction (26, 100),
- providing a number of light sources (30, 120), which are arranged on the carrier element (18) and form an arrangement (32, 106, 114, 116) of light sources (30, 120),
- recording a number of images of the object (14, 76, 94)
- rotating the carrier element (18) in the rotational direction (26, 100) and
- determining properties of the object (14, 76, 94) on the basis of the images,
wherein the carrier element (18) defines, when rotating in the rotational direction (26, 100), an inspection space (44) for recording the object (14, 76, 94), wherein the arrangement (32, 106, 114, 116) defines, during the rotation, a lateral surface (42, 58) having a first transverse extent (46) in the rotational direction (26, 100), and wherein the arrangement (32, 106, 114, 116) has a second transverse extent (104) in the rotational direction (26, 100) which is smaller than the first transverse extent (46), **characterized in that** the light sources (30, 120) are driven in the rotational direction (26, 100) in dependence on an instantaneous rotational position of the carrier element (18) in order to produce a variable light-dark pattern (49) on the entire lateral surface (42, 58) using the light sources (30, 120), and wherein the carrier element (18) has a first and a second carrier arm (20, 50, 70, 84), which each carry an arrangement (32, 106, 114, 116) of light sources (30, 120), wherein the first and the second carrier arm (20, 50, 70, 84) are arranged offset with respect to one another in the rotational direction (26, 100).

## Revendications

1. Dispositif (10) d'inspection optique d'un objet (14, 76, 94), avec :
- un élément de support (18) disposé de façon à pouvoir pivoter autour d'un axe de rotation (28) définissant une direction de rotation (26, 100) ;
- un certain nombre de sources lumineuses (30, 120) disposées au niveau de l'élément de support (18) et un agencement (32, 106, 114, 116) de sources lumineuses (30, 120) ;
- au moins une unité de prise d'image (34) permettant de prendre un certain nombre d'images de l'objet (14, 76, 94) ; et
- une unité d'analyse et de commande (36) conçue pour déterminer les propriétés de l'objet (14, 76, 94) à l'aide des images ;
l'élément de support (18) définissant un espace d'inspection (44) permettant de recevoir l'objet (14, 76, 94) en présence d'une rotation dans la direction de rotation (26, 100), l'agencement (32, 106, 114, 116) définissant une surface d'enveloppe (42, 58) avec une première extension transversale (46) dans la direction de rotation (26, 100) lors de la rotation et l'agencement (32, 106, 114, 116) possédant une deuxième extension transversale (104) dans la direction de rotation (26, 100) inférieure à la première extension transversale (46) ;
**caractérisé en ce que** l'unité d'analyse et de commande (36) est en outre conçue pour commander les sources lumineuses (30, 120) en fonction d'une position de rotation momentanée de l'élément de support (18) dans la direction de rotation (26, 100), pour produire sur la totalité de la surface d'enveloppe (42, 58) un modèle clair-obscur (49) variable à l'aide des sources lumineuses (30, 120) et l'élément de support (18) comportant un premier et un deuxième bras de support (20, 50, 70, 84) supportant respectivement un agencement (32, 106, 114, 116) de sources lumineuses (30, 120), le premier et le deuxième bras de support (20, 50, 70, 84) étant disposés de façon décalée l'un par rapport à l'autre dans la direction de rotation (26, 100).

2. Dispositif (10) selon la revendication 1, **caractérisé en ce que** les agencements (32, 106, 114, 116) des premier et deuxième bras de support (20, 50, 70, 84) sont disposés avec des distances radiales (54, 56) différentes par rapport à l'axe de rotation (28).

3. Dispositif (10) selon l'une quelconque des revendications 1 à 2, **caractérisé par** la présence d'une entretoise à longueur variable définissant la distance radiale (54, 56) de l'agencement (32, 106, 114, 116) par rapport à l'axe de rotation (28).

4. Dispositif (10) selon l'une quelconque des revendications 1 à 3, **caractérisé en ce que** l'élément de support (18) comporte un arc de support (70) avec un côté intérieur incurvé (71) le long duquel les sources lumineuses (30, 120) sont disposées.

5. Dispositif (10) selon l'une quelconque des revendications 1 à 4, **caractérisé en ce que** l'élément de support (18) comporte une bague de support (84) largement fermée avec un côté intérieur (85) au niveau duquel les sources lumineuses (30, 120) sont disposées.

6. Dispositif (10) selon l'une quelconque des revendications 1 à 5, **caractérisé en ce que** l'élément de support (18) comporte au moins un arbre creux (80, 88) au niveau duquel l'élément de support (18) est disposé de façon à pouvoir pivoter.

7. Dispositif (10) selon la revendication 6, **caractérisé en ce que** l'unité de prise d'image (34) prend les images au travers de l'arbre creux (80).

8. Dispositif selon la revendication 6 ou 7, **caractérisé en ce que** l'arbre creux (80) forme une ouverture de chargement (90) permettant d'amener l'objet (94) dans l'espace d'inspection (44).

9. Dispositif (10) selon l'une quelconque des revendications 1 à 8, **caractérisé par** la présence de côtes de refroidissement (124) réalisées au niveau de l'élément de support (18) et possédant respectivement une extension principale (126) dans la direction de rotation (46).

10. Dispositif (10) selon l'une quelconque des revendications 1 à 9, **caractérisé en ce que** l'unité d'analyse et de commande (36) est conçue pour commander à l'unité de prise d'image (34) de prendre les images de l'objet (14, 76, 94) en fonction de la position de rotation momentanée.

11. Dispositif selon l'une quelconque des revendications 1 à 10, **caractérisé en ce que** l'unité d'analyse et de commande (36) est conçue pour commander une intensité des sources lumineuses (30, 120) en fonction de la position de rotation momentanée.

12. Dispositif selon l'une quelconque des revendications 1 à 11, **caractérisé en ce que** l'unité d'analyse et de commande (36) est conçue pour commander une durée d'impulsion des sources lumineuses (30, 120) en fonction de la position de rotation momentanée.

13. Dispositif selon l'une quelconque des revendications 1 à 12, **caractérisé par** la présence d'un logement de pièce usinée pivotant (12) permettant de positionner l'objet (14, 76) dans l'espace d'inspection (44).

14. Procédé d'inspection optique d'un objet (14, 76, 94), avec les étapes suivantes :
- mise à disposition d'un élément de support (18) disposé de façon à pouvoir pivoter autour d'un axe de rotation (28) définissant une direction de rotation (26, 100) ;
- mise à disposition d'un certain nombre de sources lumineuses (30, 120) disposées au niveau de l'élément de support (18) et formant un agencement (32, 106, 114, 116) de sources lumineuses (30, 120) ;
- prise d'un certain nombre d'images de l'objet (14, 76, 94) ;
- rotation de l'élément de support (18) dans la direction de rotation (26, 100) ; et
- détermination des propriétés de l'objet (14, 76, 94) à l'aide des images ;
l'élément de support (18) définissant, en présence d'une rotation dans la direction de rotation (26, 100), un espace d'inspection (44) permettant de prendre des clichés de l'objet (14, 76, 94), l'agencement (32, 106, 114, 116) définissant une surface d'enveloppe (42, 58) avec une première extension transversale (46) dans la direction de rotation (26, 100) lors de la rotation et l'agencement (32, 106, 114, 116) possédant une deuxième extension transversale (104) dans la direction de rotation (26, 100) inférieure à la première extension transversale (46) ;
**caractérisé en ce que** les sources lumineuses (30, 120) sont commandées en fonction d'une position de rotation momentanée de l'élément de support (18) dans la direction de rotation (26, 100), pour produire sur la totalité de la surface d'enveloppe (42, 58) un modèle clair-obscur (49) variable à l'aide des sources lumineuses (30, 120) et l'élément de support (18) comportant un premier et un deuxième bras de support (20, 50, 70, 84) supportant respectivement un agencement (32, 106, 114, 116) de sources lumineuses (30, 120), le premier et le deuxième bras de support (20, 50, 70, 84) étant disposés de façon décalée l'un par rapport à l'autre dans la direction de rotation (26, 100).
